# EUROPEAN PATENT APPLICATION

(11) **EP 2 944 787 A1**
(43) Date of publication of application: **18.11.2015**
(21) Application number: 13871141.1
(22) Date of filing: 20.12.2013
(51) Int. Cl.: F02B 37/18, F02B 39/00

(54) **SUPERCHARGER**

(30) Priority: 10.01.2013 JP 2013002838
(71) Applicant: IHI Corporation, Tokyo 135-8710 (JP)
(72) Inventor: IWATA, Kazuaki, Tokyo 135-8710 (JP); MORI, Atsushi, Tokyo 135-8710 (JP); ISONO, Yuusuke, Tokyo 135-8710 (JP)
(74) Representative: Maury, Richard Philip
(86) International application number: PCT/JP2013/084218
(87) International publication number: WO 2014/109210

(57) **Abstract**

A turbocharger (C) includes: an inlet passage (18) configured to guide a fluid from outside a turbine housing (4) to a turbine wheel (8) ; a discharge passage (14) configured to discharge the fluid to outside the turbine housing (4) after the fluid rotates the turbine wheel; a bypass passage (19) configured to cause part of the fluid flowing into the inlet passage (18) to flow to the discharge passage (14) while making the part of the fluid bypassing the turbine wheel; a seat surface (14a) provided facing the discharge passage (14), an outlet end (19a) of the bypass passage (19) opened in the seat surface (14a); and an opening and closing mechanism (20) configured to open and close the outlet end (19a) of the bypass passage (19). The opening and closing mechanism (20) includes: a stem (22) turnably supported by the turbine housing (4) ; and a valve body (24) configured to open and close the outlet end (19a) of the bypass passage (19) in response to the turn of the stem (22). The seat surface (14a) tilts from a plane perpendicular to a turbine shaft (7) in a way that a side on which the stem (22) is disposed is located farther from a discharge port (13) of the discharge passage (14) than an opposite side of the outlet end (19a) of the bypass passage (19) from the side on which the stem (22) is disposed.

## Description

### [Technical Field]

The present invention relates to a turbocharger including a bypass passage configured to communicate between upstream and downstream sides of a turbine wheel while bypassing the turbine wheel.

### [Background Art]

A turbocharger raises a boost pressure to an engine by: rotating a turbine wheel using energy of an exhaust gas; and rotating a compressor wheel using the rotation of the turbine wheel via a turbine shaft. After rotating the turbine wheel, the exhaust gas is discharged to outside a turbine housing from a discharge passage provided in the turbine housing. If, however, the energy of the exhaust gas is too large, there is a case where the boost pressure increases too much. PTL 1 discloses a turbocharger which inhibits a rise in the boost pressure. This turbocharger includes a bypass passage configured to communicate upstream and downstream sides of the turbine wheel while bypassing the turbine wheel. The bypass passage makes the exhaust gas, which would otherwise flow into the turbine wheel, bypass the turbine wheel. The turbocharger further includes a waste gate valve provided in the discharge passage in which an outlet end of the bypass passage is formed. While the waste gate valve is opened, part of the exhaust gas flows to the downstream side of the turbine wheel via the bypass passage, and a rise in the boost pressure is thus inhibited.

In recent years, meanwhile, a purification system for removing air pollutants is connected to a downstream side of the discharge passage of the turbocharger in order to satisfy the necessity of inhibiting the concentration of the air pollutants in the exhaust gas. At a time of engine start, however, the temperature of a catalyst in the purification system does not rise, and the purification system accordingly cannot perform its purification function fully. This prompts the adoption of a configuration in which at the time of engine start, the waste gate valve is opened, and the exhaust gas is thereby guided to the catalyst via the bypass passage. Thereby, a high-temperature exhaust gas is directly guided to the catalyst without consuming energy to rotate the turbine wheel, and the rise in the temperature of the catalyst can be accelerated.

### [Citation List]

### [Patent Literature]

[PTL 1] Japanese Patent Application Laid-Open Publication No. 59-131727

### [Summary of Invention]

### [Technical Problem]

When the waste gate valve is opened, a direction of the flow of the exhaust gas from the bypass passage to the discharge passage is determined by a valve body and a seat surface constituting the waste gate valve. In the turbocharger disclosed in PTL 1, the direction of the flow of the exhaust gas in the bypass passage is almost perpendicular to the direction of the flow of the exhaust gas in the discharge passage, and the energy loss from the exhaust gas is therefore large. Thus, the temperature of the exhaust gas flowing through the bypass passage becomes lower, and the rise in the temperature of the catalyst is accordingly delayed.

An object of the present invention is to provide a turbocharger which is capable of quickly raising the temperature of a catalyst by use of an exhaust gas discharged from a discharge passage.

### [Solution to Problem]

For the purpose of solving the problem, a turbocharger of the present invention includes: a bearing housing, a turbine housing fixed to one end of the bearing housing, and a compressor housing fixed to the other end of the bearing housing; a turbine shaft, one end of the turbine shaft provided with a turbine wheel housed in the turbine housing, and the other end of the turbine shaft provided with a compressor wheel housed in the compressor housing; an inlet passage provided in the turbine housing, the inlet passage configured to guide a fluid to the turbine wheel, the fluid flowing into the inlet passage from outside the turbine housing; a discharge passage configured to discharge the fluid to outside the turbine housing from an outlet end formed in the turbine housing, the fluid being guided from the inlet passage to the turbine wheel to rotate the turbine wheel; a bypass passage provided in the turbine housing, the bypass passage configured to communicate between the inlet passage and the discharge passage for part of the fluid flowing into the inlet passage to flow to the discharge passage while bypassing the turbine wheel; a seat surface provided facing the discharge passage, and in which an outlet end of the bypass passage opens; and an opening and closing mechanism configured to open and close the outlet end of the bypass passage, wherein the opening and closing mechanism includes a stem turnably supported by the turbine housing, and a valve body configured to change to a closing position where the valve body comes into contact with the seat surface and closes the outlet end of the bypass passage, and configured to change to an opening position where the valve body comes away from the seat surface and opens the outlet end of the bypass passage, in response to the turn of the stem; and wherein the seat surface tilts from a plane perpendicular to the turbine shaft such that a side on which the stem is disposed is located farther from the outlet end of the discharge passage than an opposite side of the outlet end of the bypass passage from the side on which the stem is disposed.

The turbocharger of the present invention may further include: a scroll passage formed downstream of the inlet passage, and circling outside the turbine wheel in a radial direction of the turbine wheel; and a conversion passage formed extending inward from the scroll passage in the radial direction of the turbine wheel, and configured to guide the fluid to the discharge passage while changing a direction of a flow of the fluid from a circumferential direction of the turbine shaft to an axial direction of the turbine shaft. The turbocharger may be configured such that: the bypass passage communicates with a downstream side of the inlet passage; and of angles formed by first and second tangents, an angle formed between part of the second tangent which is on a side of an inlet end of the inlet passage from the first tangent and part of the first tangent which is on a side of the bypass passage from the second tangent is an obtuse angle, when defining the first tangent as a tangent, at an inlet end of the bypass passage communicating with the inlet passage, to a curve representing a direction of a central flow of the fluid flowing through the bypass passage, and the second tangent as a tangent, at the inlet end of the inlet passage, to a curve representing a direction of a central flow of the fluid flowing through the inlet passage.

The turbocharger of the present invention may have a relationship in which in a cross section including the bypass passage and the scroll passage, of angles formed between the inlet end of the bypass passage and a wall surface facing the bypass passage which is part of a wall partitioning the bypass passage and the scroll passage, an angle closer to the wall partitioning the bypass passage and the scroll passage is set at an acute angle.

### [Advantageous Effects of Invention]

The present invention can provide a turbocharger which is capable of quickly raising the temperature of a catalyst by use of an exhaust gas discharged from a discharge passage.

### [Brief Description of Drawings]

[Fig. 1]

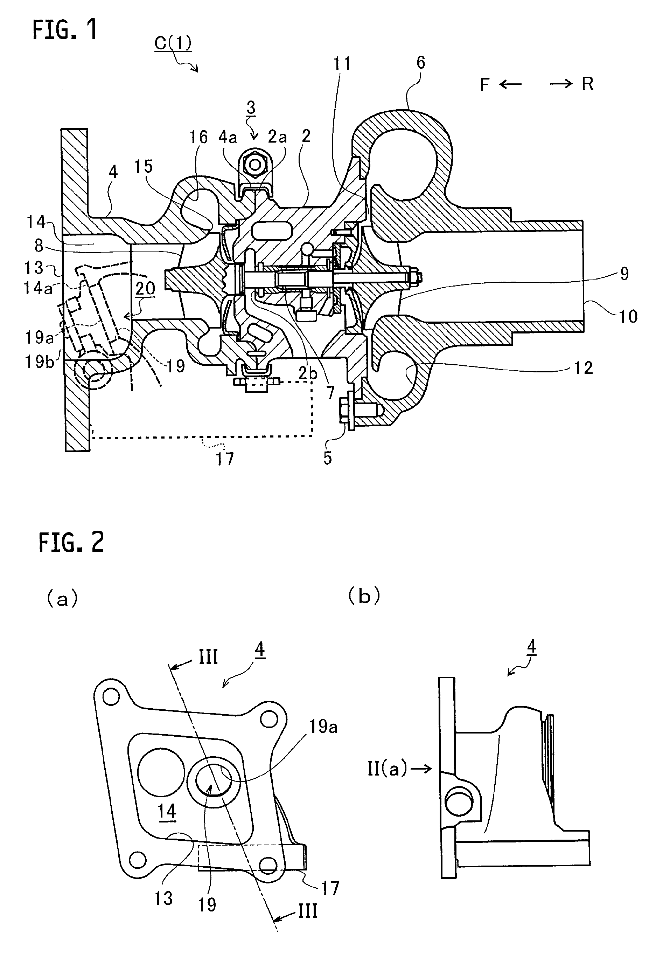

   Fig. 1 is a schematic cross-sectional view of a turbocharger of an embodiment of the present invention.
[Fig. 2]
   Fig. 2 depicts external views of a turbine housing of the embodiment of the present invention. Fig. 2 (b) is a front view of the turbine housing, and Fig. 2(a) is a view (a left side view) of the housing in a direction indicated with a II (a) arrow of Fig. 2(b).
[Fig. 3]

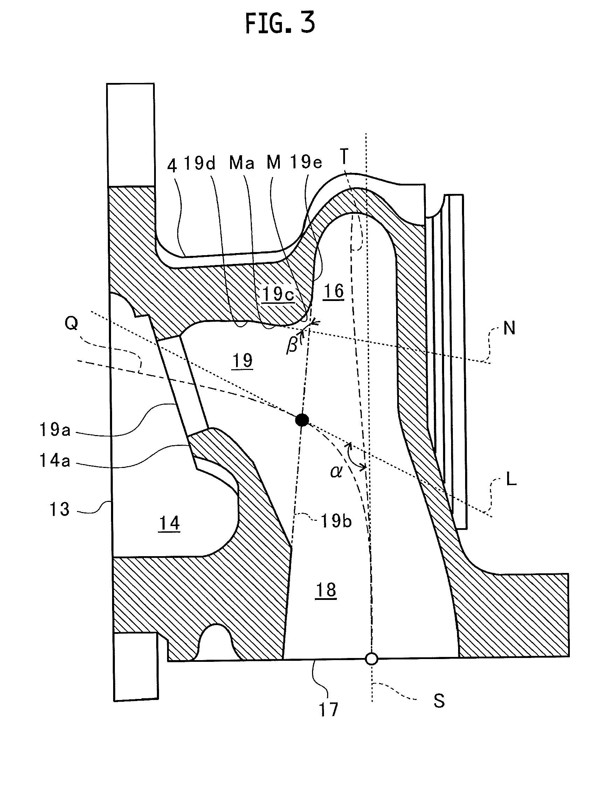

   Fig. 3 is an explanatory view for explaining a passage for an exhaust gas in the turbine housing of the embodiment of the present invention.
[Fig. 4]

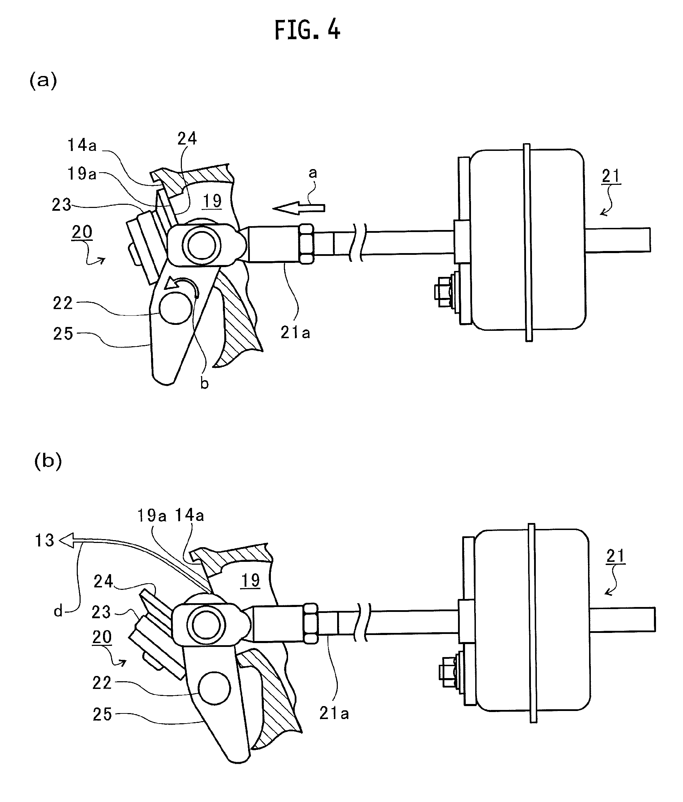

   Fig. 4 depicts explanatory views for explaining an opening and closing mechanism of the embodiment of the present invention. Fig. 4 (a) shows a state where the opening and closing mechanism closes, and Fig. 4 (b) shows a state where the opening and closing mechanism opens.
[Fig. 5]

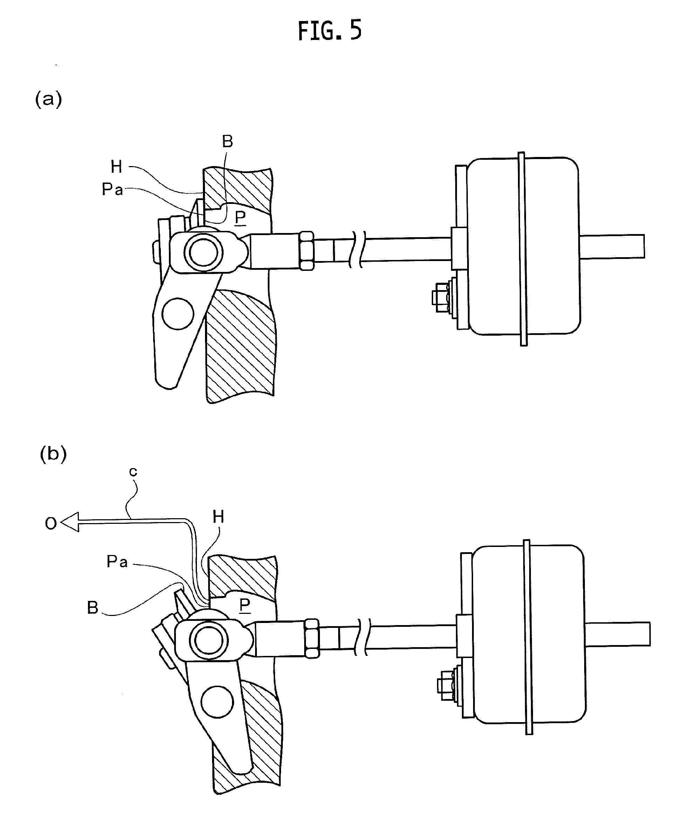

   Fig. 5 depicts arrow views of a comparative example which corresponds to Fig. 4. Fig. 5(a) shows a state where a valve body closes, and Fig. 5(b) shows a state where the valve body opens.

### [Description of Embodiments]

Referring to the accompanying drawings, detailed description will be hereinbelow provided for a preferred embodiment of the present invention. Dimensions, materials, concrete numerical values and the like in the embodiment are shown just as examples for the purpose of making the present invention easy to understand, and do not limit the present invention unless otherwise indicated. It should be noted that throughout the description and the drawings, components having virtually the same functions and configurations are denoted with the same reference signs, and duplicated explanations for such components will be omitted. In addition, components having nothing direct to do with the present invention are omitted from the drawings.

Fig. 1 is a schematic cross-sectional view of a turbocharger C. The following descriptions will be given with arrows F, R directions in Fig. 1 pointing the front and rear of the turbocharger C, respectively. As shown in Fig. 1, the turbocharger C includes a turbocharger body 1. The turbocharger body 1 includes: a bearing housing 2; a turbine housing 4 connected to a front side of the bearing housing 2 with a fastening mechanism 3; and a compressor housing 6 connected to a rear side of the bearing housing 2 with fastening bolts 5. As shown in Fig. 1, these components are integrated into a single unit

A protrusion (flange) 2a is provided on the outer peripheral surface of the bearing housing 2 near the turbine housing 4. The protrusion 2a projects outward in a radial direction of the bearing housing 2. In addition, a protrusion (flange) 4a is provided on the outer peripheral surface of the turbine housing 4 near the bearing housing 2. The protrusion 4a projects outward in a radial direction of the turbine housing 4. The bearing and turbine housings 2, 4 are fixed together by band-fastening the protrusions 2a, 4a with the fastening mechanism 3. The fastening mechanism 3 is formed from a coupling having a structure which is configured to hold the protrusions 2a, 4a between its two parts. Incidentally, the means for fixing the bearing and turbine housings 2, 4 together is not limited to the fastening mechanism 3, and other publicly-known means may be used instead.

A bearing hole 2b penetrating through the bearing housing 2 in a front-rear direction of the turbocharger C (an axial direction of the turbine shaft 7) is provided to the bearing housing 2. A turbine shaft 7 is rotatably supported by a bearing housed in the bearing hole 2b. A turbine wheel 8 is integrally fixed to a front end portion (one end) of the turbine shaft 7. The turbine wheel 8 is rotatably housed in the turbine housing 4. Furthermore, a compressor wheel 9 is integrally fixed to a rear end portion (the other end) of the turbine shaft 7. The compressor wheel 9 is rotatably housed in the compressor housing 6.

An intake port 10 whose end portion is opened toward the rear of the turbocharger C is formed in the compressor housing 6. An air cleaner (not illustrated) is connected to the intake port 10. Furthermore, when the bearing housing 2 and the compressor housing 6 are connected together with the fastening bolts 5, a diffuser passage 11 configured to boost the pressure of a fluid (air) is formed by opposing surface of the respective two housings 2, 6. The diffuser passage 11 is annularly formed outward from inside in a radial direction of the turbine shaft 7 (the compressor wheel 9), and communicates with the intake port 10 through the compressor wheel 9 in the inside in the radial direction.

In addition, an annular compressor scroll passage 12 is provided to the compressor housing 6. The compressor scroll passage 12 is located outward of the diffuser passage 11 in the radial direction of the turbine shaft 7 (the compressor wheel 9). The compressor scroll passage 12 communicates with an intake port of an engine (not illustrated), and communicates with the diffuser passage 11 as well. For this reason, while the compressor wheel 9 is rotating, the fluid is sucked into the intake port 10 from outside the compressor housing 6. Thereafter, the sucked-in fluid is guided to the intake port of the engine while the diffuser passage 11 and the compressor scroll passage 12 are boosting the pressure of (compressing) the fluid.

A discharge passage 14 opened toward the front of the turbocharger C is provided to the turbine housing 4. The discharge passage 14 has a discharge port 13, as an outlet end, which is connected to an exhaust gas purification system (not illustrated). In addition, the turbine wheel 8 is located on an inlet side of the discharge passage 14. The discharge passage 14 discharges the fluid from the discharge port 13 to the outside after the fluid rotates the turbine wheel 8 while guided by the turbine wheel 8. In addition, a conversion passage 15 and a turbine scroll passage (scroll passage) 16 are formed on an inlet side of the discharge passage 14. The turbine scroll passage 16 is annularly formed circling outside the conversion passage 15 in the radial direction of the turbine shaft 7 (the turbine wheel 8). The passage width of the turbine scroll passage 16 in the radial direction becomes smaller in a downstream direction. The turbine scroll passage 16 communicates with a gas inlet port 17 to which an exhaust gas discharged from an exhaust manifold of the engine (not illustrated) is guided, through an inlet passage 18 (described later). The conversion passage 15 is formed extending inward from the turbine scroll passage 16 in the radial direction of the turbine wheel 8. The conversion passage 15 guides the fluid, which is inside the turbine scroll passage 16, to the discharge passage 14 while changing the direction of a flow of the fluid from a circumferential direction of the turbine shaft 7 to the radial direction of the turbine shaft 7. It should be noted that the passage width of the turbine scroll passage in the radial direction is determined based on the engine performance and installation conditions, and the like. In this embodiment, its passage width in the radial direction becomes smaller in the downstream direction. However, its passage width in the radial direction does not necessarily have to become smaller in the downstream direction depending on the engine performance and installation conditions, and the like.

For this reason, the exhaust gas is guided from the gas inlet port 17 to the turbine scroll passage 16, and further to the discharge passage 14 via the turbine wheel 8. In the flow process, the exhaust gas rotates the turbine wheel 8. The rotational force of the turbine wheel 8 is transmitted to the compressor wheel 9 by the turbine shaft 7. The rotational force of the compressor wheel 9 boosts the pressure of the fluid, and the resultant fluid is guided to the intake port of the engine.

Fig. 2 depicts external views of the turbine housing 4. Fig. 2(b) is a front view of the turbine housing 4, and Fig. 2(a) is a view (a left side view) of the turbine housing 4 in a direction indicated with a II(a) arrow of Fig. 2(b).

Fig. 3 is an explanatory view for explaining a passage for the exhaust gas in the turbine housing 4, and shows a cross-sectional view of the turbine housing 4 including the inlet passage 18 which is a passage from the gas inlet port 17 through the turbine scroll passage 16. Incidentally, Fig. 3 depicts a cross section of the turbine housing 4 which is in parallel to the axial direction of the turbine shaft 7, and shows a cross section of the turbine housing 4 taken along the III-III line of Fig. 2(a).

The gas inlet port 17 is formed in the outer peripheral surface of the turbine housing 4. To put it concretely, the gas inlet port 17 is formed in a part of the outer peripheral surface which is located radially outward of the turbine wheel 8. The inlet passage 18 is formed with its inlet end being the gas inlet port 17, and with its outlet end being the turbine scroll passage 16. In other words, the turbine scroll passage 16 is formed downstream of the inlet passage 18. The exhaust gas flows from outside the turbine housing 4 into the gas inlet port 17, flows through the inlet passage 18 to the turbine scroll passage 16, and is guided to the turbine wheel 8.

A bypass passage 19 is provided in the turbine housing 4, and communicates between the discharge passage 14 and a downstream side of the inlet passage 18. Furthermore, as indicated with broken lines in Fig. 1, an outlet end 19a of the bypass passage 19 is formed inside the discharge passage 14 located downstream of the turbine wheel 8.

The bypass passage 19 causes part of the fluid flowing into the inlet passage 18 to flow to the discharge passage 14 while bypassing the turbine wheel 8. Thereby, the bypass passage 19 avoids a condition where the energy of the exhaust gas becomes too high; and thus, the turbocharged pressure becomes too high.

In addition, energy loss from the exhaust gas flowing through the bypass passage 19 while bypassing the turbine wheel 8 is smaller than that of the exhaust gas flowing via the turbine scroll passage 16. For this reason, at a time of engine start, the guiding into the discharge passage 14 of the exhaust gas flowing through the bypass passage 19 while bypassing the turbine wheel 8 makes it possible to accelerate a rate of temperature rise of a catalyst for cleaning the exhaust gas. In this embodiment, the shape of the bypass passage 19 is defined as follows in order to guide the exhaust gas, which flows through the bypass passage 19, to the discharge port 13 while further inhibiting the energy loss from the exhaust gas.

As shown in Fig. 3, an inlet end 19b of the bypass passage 19 is connected to the inlet passage 18. A curve Q indicates a direction of the central flow of the fluid flowing through the bypass passage 19. In addition, a curve T indicates a direction of the central flow of the fluid flowing through the inlet passage 18. In this respect, let us assume a tangent L (a first tangent) to the curve Q at the inlet end 19b and a tangent S (a second tangent) to the curve T at the gas inlet port 17 which is the inlet end of the inlet passage 18. In other words, the tangent L is a tangent to the curve Q at a position indicated with a black circle in Fig. 3, while the tangent S is a tangent to the curve T at a position indicated with a white circle in Fig. 3.

Of the angles formed by the tangents L, S, an angle formed between part of the tangent S which is on the side of the gas inlet port 17 from the tangent L and part of the tangent L which is on the bypass passage 19 from the tangent S (an angle on the left lower part in Fig. 3) is denoted by reference sign α. The bypass passage 19 is formed in a way that the angle α is an obtuse angle.

In a case where the bypass passage 19 is formed in the way that the angle α is an obtuse angle, part of the exhaust gas flowing through the inlet passage 18 smoothly flows into the bypass passage 19. Passage loss and the energy loss from the exhaust gas are smaller in this case than, for example, in a case where the angle α is a right angle or an acute angle. Thus, the rise in the temperature of the catalyst can be accelerated.

In the embodiment, the outlet end 19a of the bypass passage 19 and the discharge port 13 are included in the cross section of the turbine housing 4 along the III-III line, namely in the cross section along a plane in parallel to the axial direct of the turbine shaft 7. However, the outlet end 19a of the bypass passage 19 and the discharge port 13 do not necessarily have to be included in the cross section along the plane in parallel to the axial direct of the turbine shaft 7. In other words, the outlet end 19a of the bypass passage 19 and the discharge port 13 may be included in a cross section along a plane not in parallel to the turbine shaft 7 as long as the angle α is an obtuse angle. Otherwise, the outlet end 19a of the bypass passage 19 and the discharge port 13 may be included in a cross section along a curved surface as long as the angle α is an obtuse angle.

In the cross section shown in Fig. 3, namely in the cross section including the bypass passage 19 and the turbine scroll passage 16, a wall 19c partitions the bypass passage 19 and the turbine scroll passage 16. In other words, the wall 19c includes: a wall surface 19d facing the bypass passage 19; and a wall surface 19e facing the turbine scroll passage 16.

Of the angles formed by the wall surface 19d and the inlet end 19b of the bypass passage 19 (in other words, an imaginary plane including the inlet end 19b), an angle closer to the wall 19c is denoted with reference sign β. In this embodiment, the angle β is set at acute angle. In this respect, let us assume a case where of the wall 19c partitioning the bypass passage 19 and the turbine scroll passage 16, a boundary between the wall surface 19d and the wall surface 19e (namely, a corner portion formed by the wall surface 19d and the wall surface 19e) is formed from a curved surface. In this case, in the cross section shown in Fig. 3, of the angles formed by the inlet end 19b of the bypass passage 19 and a tangent N to a curve M representing the curved surface at an end portion Ma of the curve M on the side of the bypass passage 19, an angle closer to the wall surface 19d is the angle β.

When the wall 19c is formed in a way that the angle β is an acute angle, the bypass passage 19 is formed in a shape along the flow of the fluid from the inlet passage 18 to the turbine scroll passage 16. For this reason, it is possible to further reduce the passage loss in the bypass passage 19, and to thus accelerate the rise in the temperature of the catalyst.

In addition, the outlet end 19a of the bypass passage 19 is opened in a wall surface of the turbine housing 4 which faces the discharge passage 14. A seat surface 14a is provided around the outlet end 19a. In other words, the seat surface 14a is provided facing the discharge passage 14, and the outlet end 19a of the bypass passage 19 is opened in the seat surface 14a.

Furthermore, an opening and closing mechanism 20 indicated with broken lines in Fig. 1 controls a flow rate of the exhaust gas flowing through the bypass passage 19 by opening and closing the outlet end 19a of the bypass passage 19 which is formed in the seat surface 14a facing the discharge passage 14.

Fig. 4 depicts explanatory views for explaining the opening and closing mechanism 20. Fig. 4 (a) shows a state where the opening and closing mechanism 20 closes, and Fig. 4 (b) shows a state where the opening and closing mechanism 20 opens.

The opening and closing mechanism 20 includes a stem 22 which is turnably supported by the turbine housing 4 with the assistance of a bearing (not illustrated) while penetrating through the turbine housing 4. A valve body 24 is connected to the stem 22 using an attachment plate 23. When the stem 22 turns, the attachment plate 23 swings on the stem 22. The swing of the attachment plate 23 tilts the valve body 24. The outer diameter of the valve body 24 is formed larger than the diameter of the outlet end 19a of the bypass passage 19. The valve body 24 comes into contact with, or away from, the seat surface 14a in response to the turn of the stem 22.

To put it in detail, the stem 22 is fixed to a link plate 25 turnably linked to a rod 21a of an actuator 21. For this reason, when the rod 21a of the actuator 21 moves in a direction indicated with an arrow a in Fig. 4(a), the stem 22 turns in a direction indicated with an arrow b with the assistance of the link plate 25. In response to the turn of the stem 22, the valve body 24 tilts around the axis of the stem 22.

On the other hand, when the rod 21a of the actuator 21 moves in a direction opposite to the direction indicated with the arrow a, the stem 22 and the valve body 24 turn around the axis of the stem 22 in a direction opposite to the direction indicated with an arrow b.

Thereby, in conjunction with the movement of the actuator 21, the valve body 24 changes its position to a closing position where the valve body 24 comes into contact with the seat surface 14a and closes the outlet end 19a of the bypass passage 19, or to an opening position where the valve body 24 comes away from the seat surface 14a and opens the outlet end 19a of the bypass passage 19. The actuator 21 works using air pressure, like a so-called diaphragm-type one. The actuator 21 may be designed to work electrically.

In addition, the seat surface 14a tilts from a plane perpendicular to the turbine shaft 7 (in Fig. 4, the direction of the plane perpendicular to the turbine shaft 7 is a vertical direction) in a way that a side on which the stem 22 is disposed is located farther from the discharge port 13 which is the outlet end of the discharge passage 14, than an opposite side of the outlet end 19a of the bypass passage 19 from the side on which the stem 22 is disposed.

Fig. 5 depicts arrow views of a comparative example, which corresponds to Fig. 4. Fig. 5(a) shows a state where a valve body B closes, and Fig. 5 (b) shows a state where the valve body B opens. In the comparative example, a seat surface H configured to come into contact with the valve body B does not tilt from the plane perpendicular to the turbine shaft 7. In other words, the seat surface H is orthogonal to the turbine shaft 7. Incidentally, in Figs. 5(a) and 5(b), the plane orthogonal to the turbine shaft 7 extends in the vertical direction. In the comparative example, as indicated with an arrow c in Fig. 5(b), the exhaust gas flowing into a bypass passage P passes through a gap between the seat surface H and the valve body B, and blows out almost in the direction of the plane perpendicular to the turbine shaft 7. In this case, while moving from an outlet end Pa of the bypass passage P to a discharge port O, the exhaust gas loses a large amount of energy because of its collisions with the wall and the like of the turbine housing.

On the other hand, in the embodiment, the seat surface 14a tilts as shown in Fig. 4(b), and the valve body 24 is opened as illustrated there. For this reason, the exhaust gas easily flows to the discharge port 13 smoothly, as indicated with an arrow d. Thus, the exhaust gas less likely collides with the wall portion of the turbine housing 4 and the valve body 24, and the energy loss from the exhaust gas is accordingly inhibited. Thereby, a decrease in the temperature of the exhaust gas discharged from the discharge passage 14 is inhibited. At the time of engine start, it is possible to quickly raise the temperature of the catalyst by keeping the opening and closing mechanism 20 opened.

The foregoing descriptions have been provided for the embodiment in which: the stem 22 is provided downward of the outlet end 19a of the bypass passage 19 in Fig. 4; and the seat surface 14a in which the outlet end 19a is formed tilts in the way that in Fig. 4, the lower side on which the stem 22 is provided is located farther from the discharge port 13 (rightward in Fig. 4) than the upper side. Nevertheless, the placement of the stem 22 relative to the outlet end 19a and the tilt of the seat surface 14a may be in any direction all around the outlet end 19a. In any case, as long as the seat surface 14a tilts from the plane perpendicular to the turbine shaft 7 in the way that the side on which the stem 22 is disposed is located farther from the discharge end 19a of the discharge passage 14 than the opposite side of the outlet end 19a of the bypass passage 19 from the side on which the stem 22 is disposed, the same working and effects as described above can be achieved.

Although the foregoing descriptions have been provided for the preferred embodiment of the present invention by referring to the accompanying drawings, it is a matter of course that the present invention is not limited to the embodiment. It is clear that those skilled in the art could arrive at various modifications or corrections within a range of the scope of claims. It shall be understood that such modifications and corrections belong to the technical scope of the present invention, as a matter of course.

### [Industrial Applicability]

The present invention can be used for turbocharges each including the bypass passage configured to communicate between the upstream and downstream sides of the turbine wheel while bypassing the turbine wheel.

## Claims

1. A turbocharger comprising:
a bearing housing, a turbine housing fixed to one end of the bearing housing, and a compressor housing fixed to the other end of the bearing housing;
a turbine shaft provided at one end thereof with a turbine wheel housed in the turbine housing and at the other end thereof with a compressor wheel housed in the compressor housing;
an inlet passage provided in the turbine housing, the inlet passage configured to guide a fluid to the turbine wheel, the fluid flowing into the inlet passage from outside the turbine housing;
a discharge passage configured to discharge the fluid to outside the turbine housing from an outlet end formed in the turbine housing, the fluid being guided from the inlet passage to rotate the turbine wheel;
a bypass passage provided in the turbine housing, the bypass passage configured to communicate between the inlet passage and the discharge passage for part of the fluid flowing into the inlet passage to flow to the discharge passage while bypassing the turbine wheel;
a seat surface provided facing the discharge passage, and in which an outlet end of the bypass passage opens; and
an opening and closing mechanism configured to open and close the outlet end of the bypass passage,
wherein
the opening and closing mechanism comprises
a stem turnably supported by the turbine housing, and
a valve body configured to change to a closing position where the valve body comes into contact with the seat surface and closes the outlet end of the bypass passage, and configured to change to an opening position where the valve body comes away from the seat surface and opens the outlet end of the bypass passage, in response to the turn of the stem, and
wherein the seat surface tilts from a plane perpendicular to the turbine shaft such that a side on which the stem is disposed is located farther from the outlet end of the discharge passage than an opposite side of the outlet end of the bypass passage from the side on which the stem is disposed.

2. The turbocharger according to claim 1, further comprising:
a scroll passage formed downstream of the inlet passage, and circling outside the turbine wheel in a radial direction of the turbine wheel; and
a conversion passage formed extending inward from the scroll passage in the radial direction of the turbine wheel, and configured to guide the fluid to the discharge passage while changing a direction of a flow of the fluid from a circumferential direction of the turbine shaft to an axial direction of the turbine shaft, wherein
the bypass passage communicates with a downstream side of the inlet passage, and
of angles formed by first and second tangents, an angle formed between part of the second tangent which is on a side of an inlet end of the inlet passage from the first tangent and part of the first tangent which is on a side of the bypass passage from the second tangent is an obtuse angle, when defining the first tangent as a tangent, at an inlet end of the bypass passage communicating with the inlet passage, to a curve representing a direction of a central flow of the fluid flowing through the bypass passage, and the second tangent as a tangent, at the inlet end of the inlet passage, to a curve representing a direction of a central flow of the fluid flowing through the inlet passage.

3. The turbocharger according to claim 2, wherein
in a cross section including the bypass passage and the scroll passage, of angles formed between the inlet end of the bypass passage and a wall surface facing the bypass passage which is part of a wall partitioning the bypass passage and the scroll passage, an angle closer to the wall partitioning the bypass passage and the scroll passage is set at an acute angle.
